# EUROPEAN PATENT SPECIFICATION

(11) **EP 2 319 733 B1**
(45) Date of publication and mention of the grant of the patent: **23.01.2013**
(21) Application number: 10014223.1
(22) Date of filing: 02.11.2010
(51) Int. Cl.: B60R 21/0132, B60R 21/017

(54) **Vehicle collision determination device**
Fahrzeugkollisionsbestimmungsvorrichtung
Dispositif permettant la détermination de collision d'un véhicule

(30) Priority: 05.11.2009 JP 2009254060
(43) Date of publication of application: 11.05.2011
(73) Proprietor: Keihin Corporation, Shinjuku-ku, Tokyo (JP)
(72) Inventor: Yuan, Fang, Shioya-gun Tochigi-ken (JP); Sano, Kousuke, Shioya-gun Tochigi-ken (JP)
(74) Representative: Eisenführ, Speiser & Partner

(56) References cited:
- WO-A1-97/48582
- WO-A2-2007/119285
- US-A1- 2001 009 337
- US-A1- 2005 107 933
- US-A1- 2006 244 245
- US-A1- 2007 173 998

## Description

### BACKGROUND OF THE INVENTION

### Field of the Invention

The present invention relates to a vehicle collision determination device, and more particularly, to a vehicle collision determination device that controls the activation of an occupant protection system during a vehicle collision.

### Description of the Related Art

An SRS (Supplemental Restraint System) airbag system is generally known as a system for protecting occupants during a vehicle collision. This SRS airbag system detects the occurrence of a vehicle collision based on acceleration data acquired from satellite sensors provided at each portion of a vehicle and activates an occupant protection system such as an airbag or a seatbelt pretensioner.

Document US 2005/0107933 A1 discloses a vehicle collision determination device according to the preamble of claim 1.

Furthermore, document US 2007/0173998 A1 discloses an occupant protection activation device, wherein at least one of the output signals of the front acceleration sensor and an analogue acceleration sensor disposed within the vehicle are used to make a collision determination. Then, a safety determination is made based on other sensors and a saving acceleration sensor. When both of the collision determination signals and the saving signal indicate significance, the occupant protection device is activated. Specifically, the signals obtained by performing collision determination and safety determination are correlated by an AND function.

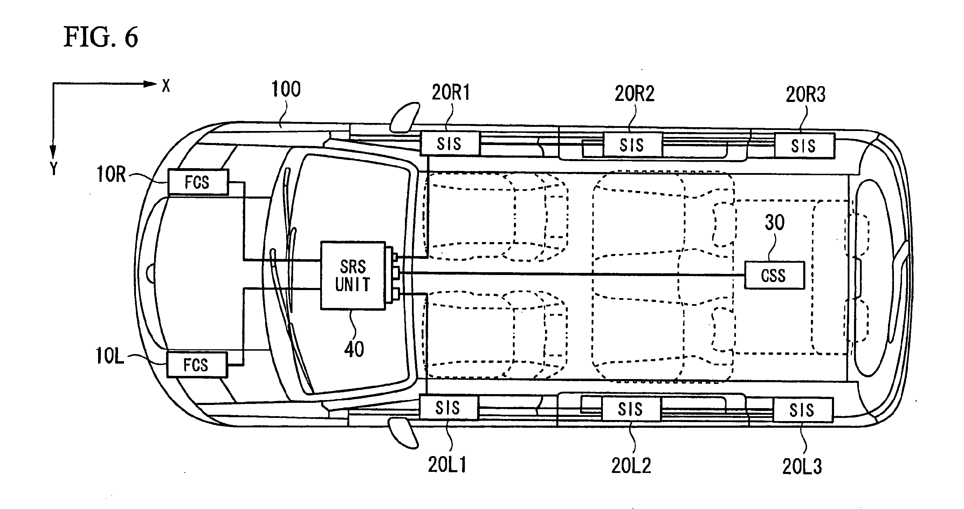

Moreover, FIG 6 shows a configuration example of an SRS airbag system. The satellite sensors come in various types including a front crash sensor (FCS), a side impact sensor (SIS), a central safing sensor (CSS), and the like. The FCSs (see reference numerals 10R and 10L) are provided to the left and right of the front of a vehicle 100 so as to detect an acceleration acting in the longitudinal direction (X-axis direction) of the vehicle 100. The SISs (see reference numerals 20R1, 20R2, 20R3, 20L1, 20L2, and 20L3) are provided on both sides of the vehicle 100 so as to detect an acceleration acting in the lateral direction (Y-axis direction) of the vehicle 100. The CSS (see reference numeral 30) is provided at the center of the rear of the vehicle 100 so as to detect an acceleration acting in the Y-axis direction.

A vehicle collision determination device (ECU: Electronic Control Unit) that controls activation of an occupant protection system based on acceleration data acquired from the satellite sensors provided at each portion of the vehicle 100 is called an SRS (see reference numeral 40) and is provided at the central portion of the vehicle 100 as a unit independent from the ECU that controls an engine and the like. Moreover, each satellite sensor is a unit in which an acceleration sensor and a communication circuit are integrated. The acceleration sensor outputs an analog acceleration signal corresponding to the result of acceleration detection. The communication circuit converts the analog acceleration signal to acceleration data in accordance with a command from the SRS 40 and sends the acceleration data to the SRS 40.

The SRS 40 includes therein X and Y-axis main G-sensors that detect accelerations acting in the X and Y-axis directions, respectively, and a CPU (Central Processing Unit) that performs collision determination based on the acceleration data acquired from the main G-sensors and the satellite sensors and activates the occupant protection system in accordance with the detection result.

Regarding the details of the configuration and collision determination method of the conventional SRS airbag system, reference can be made to Japanese Unexamined Patent Application, First Publication No. 2005-263145, Japanese Examined Patent Application, Second Publication No. 2941216, and the like, for example.

The SRS 40 performs a safing determination as to a side collision using the acceleration data acquired from the CSS 30 and the internal Y-axis main G-sensor as well as main collision determination as to side collision using the acceleration data acquired from the SISs, and performs final determination as to the side collision based on the AND condition of the main collision determination result and the safing determination result.

In the related art, the safing determination as to a side collision was performed based on only the acceleration data acquired from the Y-axis main G-sensor. However, in long vehicles with three rows of seats, since the distance from the side collision site to the Y-axis main G-sensor is long, it takes time until the impact is transmitted to the Y-axis main G-sensor. Thus, there was concern about the accuracy of the safing determination (that is, concern about malfunctioning of the occupant protection system). In order to prevent this, the CSS 30 was added at the center of the rear of the vehicle as a satellite sensor for safing determination.

On the other hand, since the addition of the CSS 30 leads to an increase in the cost of the entire system, there has been a demand recently for the development of a system without the CSS 30 so as to reduce costs. In order to cope with such a demand, it was essential to develop logic capable of performing highly accurate safing determination even without the CSS 30.

The present invention has been made in view of the situation described above, and it is an object of the present invention to provide a vehicle collision determination device capable of performing highly accurate safing determination without adding an additional satellite sensor for safing determination.

### SUMMARY OF THE INVENTION

According to the present invention this object is accomplished by a vehicle collision determination device as set out in the appended claims.

Specifically, the vehicle collision determination device according to the present invention is a vehicle collision determination device that performs a side collision determination based on acceleration data acquired from first side satellite sensors and second side satellite sensors provided on a first side surface and a second side surface of the vehicle and controls activation of an occupant protection system based on a result of the side collision determination, including: a main collision determination algorithm that performs a main collision determination using a first acceleration data acquired from a first satellite sensor at a last stage among the first side satellite sensors provided on the first side surface; a safing determination algorithm that performs a safing determination using a second acceleration data acquired from a second satellite sensor at a stage preceding the last stage the second satelite sensor (20R2) being provided on the first side surface; and a first logical AND operation that performs a logical AND operation between a result of the main collision determination and a result of the safing determination to obtain a result of the logical AND operation as a final result of the side collision determination.

The vehicle collision determination device according to a further aspect is the vehicle collision determination device according to the first solving means, in which the safing determination algorithm performs the safing determination using a third acceleration data acquired from a third satellite sensor at a last stage among the second side satellite sensors provided on the second side surface in addition to the second acceleration data.

The vehicle collision determination device according to a still further aspect is the vehicle collision determination device according to the second solving means, in which the safing determination algorithm includes: a first operation that calculates a first operation value using the second acceleration data; a first comparison that compares magnitudes of the first operation value and a first threshold value; a second operation that calculates a second operation value using the third acceleration data; a second comparison that compares magnitudes of the second operation value and a second threshold value; and a second logical AND operation that performs a logical AND operation between a result of the comparison by the first comparison and a result of the comparison by the second comparison to obtain a result of the logical AND operation as the result of the safing determination.

The vehicle collision determination device according to a still further aspect is the vehicle collision determination device according to any one of the first to third solving means, in which the main collision determination algorithm includes: a third operation that calculates a third operation value using the first acceleration data; and a third comparison that compares magnitudes of the third operation value and a third threshold value and obtains a result of the comparison as the result of the main collision determination.

The vehicle collision determination device according to a still further aspect is the vehicle collision determination device according to any one of the first to third solving means, in which the main collision determination algorithm performs the main collision determination using a third acceleration data acquired from a third satellite sensor at a last stage among the second side satellite sensors provided on the second side surface in addition to the first acceleration data.

The vehicle collision determination device according to a still further aspect is the vehicle collision determination device according to the fifth solving means, in which the main collision determination algorithm includes: a fourth operation that calculates a fourth operation value using the first acceleration data; a fifth operation that calculates a fifth operation value using the third acceleration data; and a map determination that determines whether or not an intersection of the fourth operation value and the fifth operation value on a 2-dimensional map is included in a collision area set on the 2-dimensional map and obtains a result of the determination as the result of the main collision determination.

The vehicle collision determination device according to a still further aspect is the vehicle collision determination device according to any one of the first to third solving means, in which the main collision determination algorithm includes: a first main collision determination algorithm that performs a first main collision determination using the first acceleration data; a second main collision determination algorithm that performs a second main collision determination using the first acceleration data and a third acceleration data acquired from a third satellite sensor at a last stage among the second side satellite sensors provided on the second side surface; and a logical OR operation that performs a logical OR operation between a result of the first main collision determination and a result of the second main collision determination to obtains a result of the logical OR operation as the final result of the main collision determination.

The vehicle collision determination device according to a still further aspect is the vehicle collision determination device according to the eighth solving means, in which the first main collision determination algorithm includes: a third operation that calculates a third operation value using the first acceleration data; and a third comparison that compares magnitudes of the third operation value and a third threshold value and obtains a result of the comparison as a result of the first main collision determination, and wherein the second main collision determination algorithm includes: a fourth operation that calculates a fourth operation value using the first acceleration data; a fifth operation that calculates a fifth operation value using the third acceleration data; and a map determination that determines whether or not an intersection of the fourth operation value and the fifth operation value on a 2-dimensional map is included in a collision area set on the 2-dimensional map and obtains a result of the determination as a result of the second main collision determination.

In the vehicle collision determination device according to the present invention, the safing determination is performed using a satellite sensor at a stage preceding the satellite sensor at the last stage used for the main collision determination among the satellite sensors provided on one side surface. Thus, even when a side collision occurs near the satellite sensor at the last stage, the time for the impact to be transmitted to the satellite sensor at the preceding stage decreases. Therefore, the difference in time between the acceleration data acquired from the satellite sensor at the last stage and the acceleration data acquired from the satellite sensor at the preceding stage can be suppressed as much as possible.
According to the vehicle collision determination device of the present invention, it is possible to perform a highly accurate safing determination using acceleration data acquired from an existing satellite sensor without adding an additional satellite sensor for safing determination.

### BRIEF DESCRIPTION OF THE DRAWINGS

FIG 1 is a block diagram of a vehicle collision determination device (SRS 50) according to a first embodiment of the present invention.
FIG. 2 is a diagram showing the relationship between a first safing determination threshold TH_SF1 and a second safing determination threshold TH_SF2 used in a safing determination algorithm 52.
FIG 3 is a block diagram of a vehicle collision determination device (SRS 50A) according to a second embodiment of the present invention.
FIG. 4 is a diagram illustrating a map determination function by a map creation 54c and a map comparison 54d in a main collision determination algorithm 54.
FIG 5 is a block diagram of a vehicle collision determination device (SRS 50B) according to a third embodiment of the present invention.
FIG. 6 is a diagram showing a configuration example of an SRS airbag system.

### DETAILED DESCRIPTION OF THE INVENTION

Hereinafter, embodiments of the present invention will be described with reference to the drawings.
In the following description, an SRS used in an SRS airbag system shown in FIG. 6 will be illustrated and described as a vehicle collision determination device according to the present invention. The SRS of the present embodiment will be denoted by reference numeral 50 for differentiation from the SRS 40 shown in FIG. 6.

### [First Embodiment]

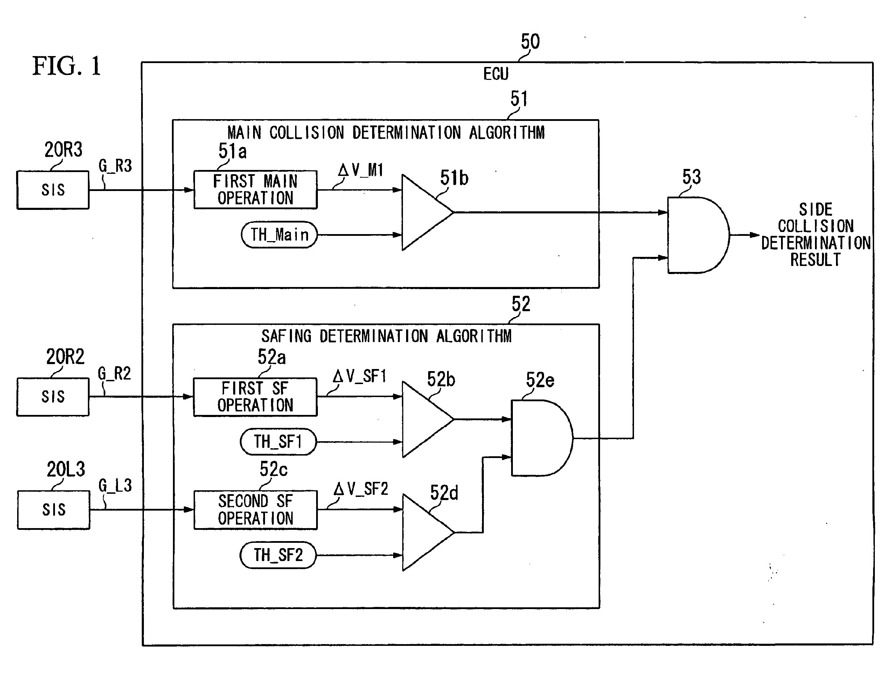

FIG. 1 is a block diagram of an SRS 50 according to a first embodiment. As shown in FIG 1, the SRS 50 includes a main collision determination algorithm 51, a safing determination algorithm 52, and a first AND operation 53 (first logical AND operation).

The main collision determination algorithm 51 performs main collision determination using acceleration data G_R3 acquired from an SIS 20R3 at the last stage among a plurality of satellite sensors (namely SISs 20R1, 20R2, and 20R3) provided on one side surface (in the present embodiment, the right side surface). The main collision determination algorithm 51 includes a first main operation 5 1 a (third operation) and a main comparison 51 b (third comparison).

The first main operation 51a calculates a first velocity variation ΔV_M1 (third operation value) for main collision determination by integrating the acceleration data G_R3 acquired from the SIS 20R3 over a predetermined period. The main comparison 51b compares the magnitudes of the first velocity variation ΔV_M1 1 calculated by the first main operation 5 1 a and a main collision determination threshold TH_Main (third threshold) and obtains the result of the comparison as the result of the main collision determination. Here, when the first velocity variation ΔV_M1 is greater than the main collision determination threshold TH_Main, the main comparison 51 b sets the result of the main collision determination to ON ("1").

The safing determination algorithm 52 performs a safing determination using acceleration data G_L3 acquired from an SIS 20L3 at the last stage among a plurality of satellite sensors (namely, SISs 20L1, 20L2, and 20L3) provided on the other side surface (namely, the left side surface) in addition to the acceleration data G_R2 acquired from the satellite sensor (namely, the SIS 20R2) at the stage preceding the SIS 20R3. The safing determination algorithm 52 includes a first SF operation 52a (first operation), a first SF comparison 52b (first comparison), a second SF operation 52c (second operation), a second SF comparison 52d (second comparison), and a second AND operation 52e (second logical AND operation).

The first SF operation 52a calculates a first velocity variation ΔV_SF1 1 (first operation value) for safing determination by integrating the acceleration data G_R2 acquired from the SIS 20R2 over a predetermined period. The first SF comparison 52b compares the magnitudes of the first velocity variation AV_SF1 calculated by the first SF operation 52a and a first safing determination threshold TH_SF1 (first threshold). Here, when the first velocity variation AV_SF1 is greater than the first safing determination threshold TH_SF1, the first SF comparison 52b sets the result of the comparison to ON.

The second SF operation 52c calculates a second velocity variation AV_SF2 (second operation value) for safing determination by integrating the acceleration data G_L3 acquired from the SIS 20L3 over a predetermined period. The second SF comparison 52d compares the magnitudes of the second velocity variation AV_SF2 calculated by the second SF operation 52c and a second safing determination threshold TH_SF2 (second threshold). Here, when the second velocity variation ΔV_SF2 is greater than the second safing determination threshold TH_SF2, the second SF comparison 52d sets the result of the comparison to ON.

The second AND operation 52e performs a logical AND operation between the comparison result of the first SF comparison 52b and the comparison result of the second SF comparison 52d to obtain the result of the logical AND operation as the result of the safing determination. That is, when both the comparison result of the first SF comparison 52b and the comparison result of the second SF comparison 52d are ON, the result of the safing determination will be ON.

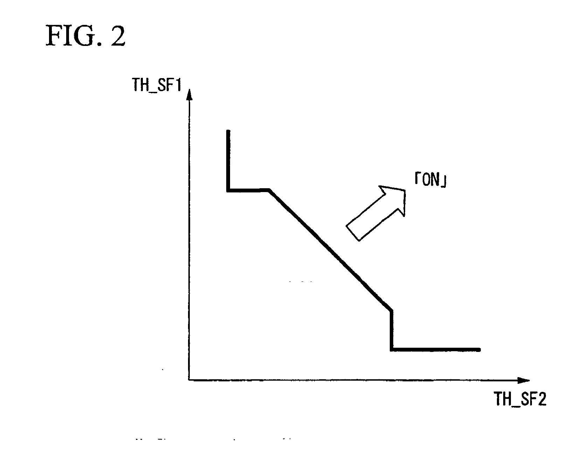

FIG. 2 shows the relationship between the first safing determination threshold TH_SF1 and the second safing determination threshold TH_SF2. As shown in FIG. 2, when the first safing determination threshold TH_SF1 has a relatively high value, the second safing determination threshold TH_SF2 for the opposite side is set to a relatively low value. Similarly, when the second safing determination threshold TH_SF2 has a relatively high value, the first safing determination threshold TH_SF1 for the opposite side is set to a relatively low value. By setting the safing determination thresholds TH_SF1 and TH_SF2 in such a manner, it is possible to prevent the occurrence of a situation where the safing determination erroneously result in ON when a minor collision (a collision of a minor enough extent that it is not necessary to activate an occupant protection system) occurs on the same side surface (in this example, the right side surface).

Returning to FIG. 1, the first AND operation 53 performs a logical AND operation between the main collision determination result of the main collision determination algorithm 51 and the safing determination result of the safing determination algorithm 52 and obtains the result of the logical AND operation as the final result of the side collision determination. That is, when both the main collision determination result and the safing determination result is ON, the final result of the side collision determination will be ON.
When the final side collision determination result is ON as above, the SRS 50 activates an occupant protection system (for example, side airbags and curtain airbags) for side collision.

As described above, the SRS 50 of the present embodiment performs a safing determination using the acceleration data G_R2 acquired from the existing satellite sensor, namely the SIS 20R2 provided at the stage preceding the SIS 20R3 at the last stage. Thus, even when a side collision occurs near the SIS 20R3 at the last stage, the time for the impact to be transmitted to the SIS 20R2 decreases. Therefore, the difference in time between the acceleration data G_R3 acquired from the SIS 20R3 and the acceleration data G_R2 acquired from the SIS 20R2 can be suppressed as much as possible.

According to the SRS 50 of the present invention, it is possible to perform a highly accurate safing determination using the acceleration data acquired from an existing satellite sensor without adding an additional satellite sensor (the CSS 30 in FIG 6) for safing determination. Moreover, as described above, in the safing determination, the logical AND operation between the respective threshold comparison result is performed using the acceleration data acquired from the SIS 20R2 and the SIS 20L3 on the opposite side. Thus, it is possible to prevent the occurrence of a situation where the safing determination erroneously result is ON, and accordingly, the side collision determination erroneously result is ON, when a minor collision occurs on the right side surface.

### [Second Embodiment]

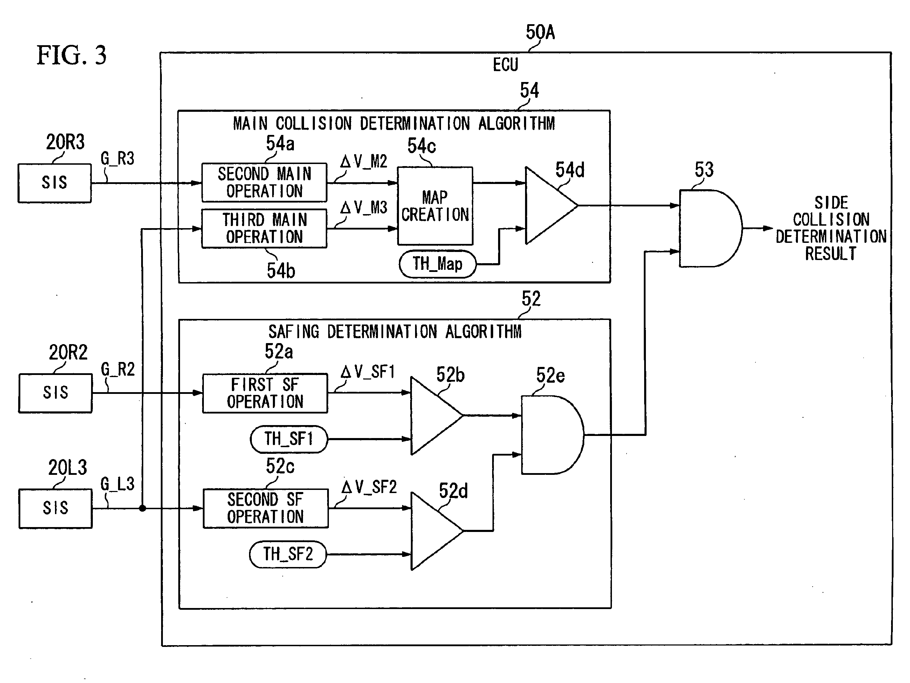

Next, a second embodiment of the present invention will be described. FIG. 3 is a block diagram of an SRS 50A according to the second embodiment. In FIG. 3, the same constituent elements as the first embodiment (FIG. 1) will be denoted by the same reference numerals, and description thereof will be omitted. As shown in FIG. 3, the SRS 50A of the second embodiment is different in that it includes a main collision determination algorithm 54 of which the collision determination logic is different from that of the main collision determination algorithm 51 described in the first embodiment.

The main collision determination algorithm 54 performs main collision determination using the acceleration data G_L3 acquired from the SIS 20L3 at the last stage provided on the left side surface, in addition to the acceleration data G_R3 acquired from the SIS 20R3 at the last stage provided on the right side surface. The main collision determination algorithm 54 includes a second main operation 54a (fourth operation), a third main operation 54b (fifth operation), a map creation 54c, and a map comparison 54d. The map creation 54c and the map comparison 54d correspond to a map determination of the present invention.

The second main operation 54a calculates a second velocity variation ΔV_M2 (fourth operation value) for main collision determination by integrating the acceleration data G_R3 acquired from the SIS 20R3 over a predetermined period. The third main operation 54b calculates a third velocity variation ΔV_M3 (fifth operation value) for main collision determination by integrating the acceleration data G_L3 acquired from the SIS 20L3 on the opposite side over a predetermined period.

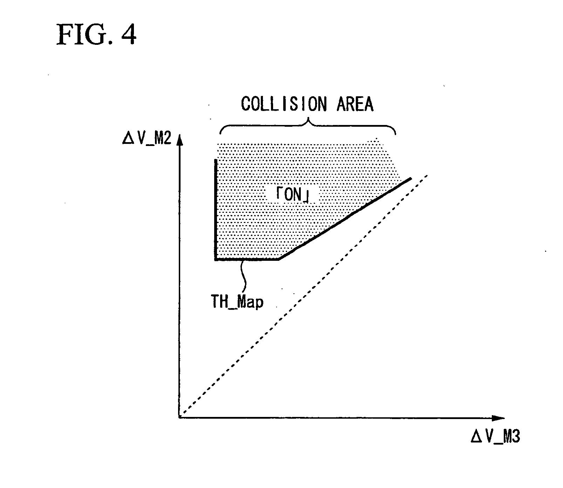

As shown in FIG. 4, the map creation 54c plots the intersections of the second velocity variation ΔV_M2 calculated by the second main operation 54a and the third velocity variation ΔV_M3 calculated by the third main operation 54b on a 2-dimensional map of which the vertical axis is the second velocity variation ΔV_M2 and the horizontal axis is the third velocity variation ΔV_M3. The map comparison 54d determines whether or not an intersection plotted on the 2-dimensional map as above is included in an area (collision area) surrounded by map collision determination thresholds TH_Map and obtains the result of the determination as the result of the main collision determination. Here, when the intersection of the second velocity variation ΔV_M2 and the third velocity variation ΔV_M3 is included in the collision area, the map comparison 54d sets the result of the main collision determination to ON.

In the SRS 50A of the second embodiment, by using the main collision determination algorithm 54 having the above-described collision determination logic, it is possible to prevent the occurrence of a situation where skidding of the vehicle 100 is erroneously determined to be a side collision.

### [Third Embodiment]

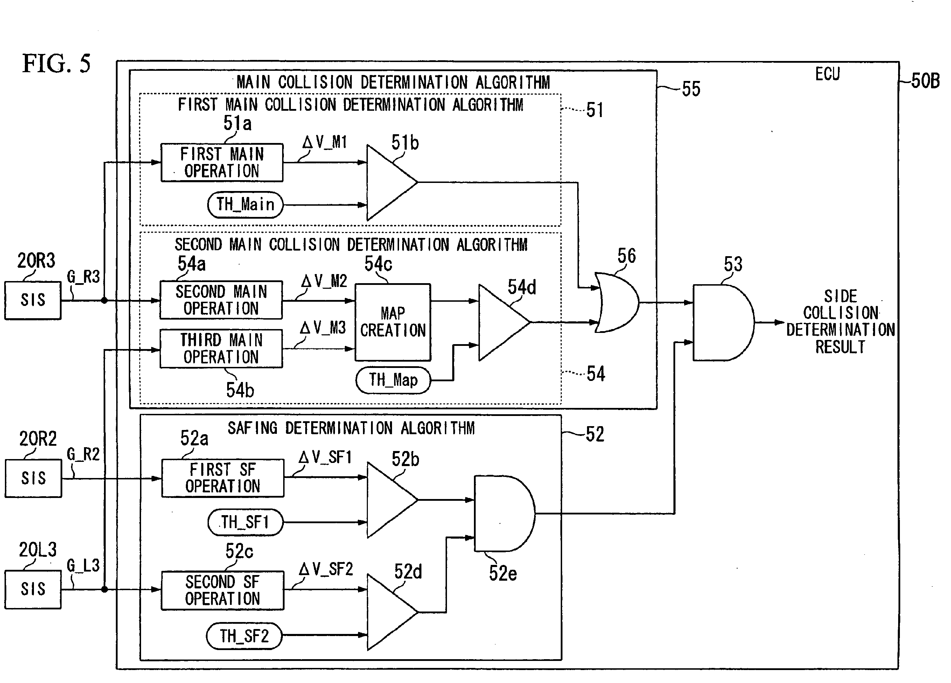

Next, a third embodiment of the present invention will be described. FIG. 5 is a block diagram of an SRS 50B of the third embodiment. In FIG. 5, the same constituent elements as the first embodiment (FIG. 1) and the second embodiment (FIG. 3) will be denoted by the same reference numerals, and description thereof will be omitted. As shown in FIG 5, the SRS 50B of the third embodiment is different in that it includes a main collision determination algorithm 55 of which the collision determination logic is different from that of the main collision determination algorithm 51 described in the first embodiment and the main collision determination algorithm 54 described in the second embodiment.

More specifically, the main collision determination algorithm 55 includes the main collision determination algorithm 51 described in the first embodiment as a first main collision determination algorithm and the main collision determination algorithm 54 described in the second embodiment as a second main collision determination algorithm. The main collision determination algorithm 55 further includes an OR operation 56 (logical OR operation) that performs a logical OR operation between the result of the first main collision determination and the result of the second main collision determination and obtains the result of the logical OR operation as the final result of the main collision determination.

That is, the main collision determination algorithm 55 of the third embodiment includes both the collision determination logic of the main collision determination algorithm 51 described in the first embodiment (where the main collision determination is performed using the acceleration data G_R3 acquired from the SIS 20R3 at the last stage provided on the right side surface) and the collision determination logic of the main collision determination algorithm 54 described in the second embodiment (where the main collision determination is performed using the acceleration data G_L3 acquired from the SIS 20L3 on the opposite side in addition to the acceleration data G_R3 acquired from the SIS 20R3 at the last stage provided on the right side surface). When at least one of the determination result is ON, the final main collision determination result will be ON.

The collision determination logic of the main collision determination algorithm 51 described in the first embodiment is appropriate for high-velocity collision, and the collision determination logic of the main collision determination algorithm 54 described in the second embodiment is appropriate for medium and low-velocity collision. Therefore, by using the SRS 50B of the third embodiment, an even more highly accurate side collision determination can be performed.

While the first to third embodiments of the present invention have been described above, the present invention is not limited to the embodiments only, and the following modifications are possible.
(1) The embodiments have been described for a case where focusing on the satellite sensors (SISs 20R1, 20R2, and 20R3) provided on the right side surface, the main collision determination is performed using the acceleration data G_R3 acquired from the SIS 20R3 at the last stage provided on the right side surface, and the safing determination is performed using the acceleration data G_R2 acquired from the SIS 20R2 at the preceding stage. This configuration can cope with a collision on the right side surface but may not be able to cope with a collision on the left side surface. Therefore, in practice, the configurations shown in FIGS. 1, 3, and 5 may need to be provided for the satellite sensors (SISs 20L1, 20L2, and 20L3) on the left side surface.
(2) The embodiments have been described for a case where three SISs are provided on each side surface of the vehicle 100. However, the present invention can be applied to a case where two or four SISs, for example, are provided on each side surface.
(3) The safing determination logic of the safing determination algorithm 52 is not limited to that shown in FIGS. 1, 3, and 5. The spirit of the present invention is to perform the safing determination using a satellite sensor (the SIS 20R2) disposed on the same side surface close to a satellite sensor (the SIS 20R3) used for the main collision determination. Therefore, the safing determination logic may be changed without departing from the spirit. Moreover, the collision determination logics of the main collision determination algorithms 51, 54, and 55 are not limited to those shown in FIGS. 1, 3, and 5. These collision determination logics can be changed in accordance with the accuracy and specifications required for the system.
(4) The SRS airbag system shown in FIG. 6 is only an example of a system to which the SRSs 50, 50A, and 50B can be applied, the type of vehicles and the type and number of satellite sensors are not limited to the system of FIG. 6. The vehicle collision determination device according to the present invention can be applied to various system configurations.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A vehicle collision determination device (50, 50A 50B) that performs a side collision determination based on acceleration data acquired from first side satellite sensors (20R1, 20R2, 20R3) and second side satellite sensors (20L1, 20L2, 20L3) provided on a first side surface and a second side surface of the vehicle (100) and controls activation of an occupant protection system based on a result of the side collision determination, comprising:
a main collision determination algorithm (51, 54, 55) that performs a main collision determination using a first acceleration data (G_R3) acquired from a first satellite sensor (20R3) at a last stage among the first side satellite sensors (20R1, 20R2, 20R3) provided on the first side surface;
a safing determination algorithm (52) that performs a safing determination using a second acceleration data (G_R2) acquired from a second satellite sensor (20R2) at a stage preceding the last stage,
and a first logical AND operation (53) that performs a logical AND operation between a result of the main collision determination and a result of the safing determination to obtain a result of the logical AND operation as a final result of the side collision determination,
**characterized in that** the second satellite sensor (20R2) is provided on the first side surface.

2. The vehicle collision determination device (50, 50A, 50B) according to claim 1, wherein the safing determination algorithm (52) performs the safing determination using a third acceleration data (G_L3) acquired from a third satellite sensor (20L3) at a last stage among the second side satellite sensors (20L1, 20L2, 20L3) provided on the second side surface in addition to the second acceleration data (G_R2).

3. The vehicle collision determination device (50, 50A, 50B) according to claim 2,
wherein the safing determination algorithm (52) includes:
a first operation (52a) that calculates a first operation value using the second acceleration data (G_R2);
a first comparison (52b) that compares magnitudes of the first operation value and a first threshold value;
a second operation (52c) that calculates a second operation value using the third acceleration data (G_L3);
a second comparison (52d) that compares magnitudes of the second operation value and a second threshold value; and
a second logical AND operation (52e) that performs a logical AND operation between a result of the comparison by the first comparison (52b) and a result of the comparison by the second comparison (52d) to obtain a result of the logical AND operation as the result of the safing determination.

4. The vehicle collision determination device (50) according to any one of claims 1 to 3,
wherein the main collision determination algorithm (51) includes:
a third operation (51a) that calculates a third operation value using the first acceleration data (G_R3); and
a third comparison (51b) that compares magnitudes of the third operation value and a third threshold value and obtains a result of the comparison as the result of the main collision determination.

5. The vehicle collision determination device (50A) according to any one of claims 1 to 3, wherein the main collision determination algorithm (54) performs the main collision determination using a third acceleration data (G_L3) acquired from a third satellite sensor (20L3) at a last stage among the second side satellite sensors (20L1, 20L2, 20L3) provided on the second side surface in addition to the first acceleration data (G_R3).

6. The vehicle collision determination device (50A) according to claim 5,
wherein the main collision determination algorithm (54) includes:
a fourth operation (54a) that calculates a fourth operation value using the first acceleration data (G_R3);
a fifth operation (54b) that calculates a fifth operation value using the third acceleration data (G_L3); and
a map determination that determines whether or not an intersection of the fourth operation value and the fifth operation value on a 2-dimensional map is included in a collision area set on the 2-dimensional map and obtains a result of the determination as the result of the main collision determination.

7. The vehicle collision determination device (50B) according to any one of claims 1 to 3,
wherein the main collision determination algorithm (55) includes:
a first main collision determination algorithm (51) that performs a first main collision determination using the first acceleration data (G_R3);
a second main collision determination algorithm (54) that performs a second main collision determination using the first acceleration data (G_R3) and a third acceleration data (G_L3) acquired from a third satellite sensor (20L3) at a last stage among the second side satellite sensors (20L1, 20L2, 20L3) provided on the second side surface; and
a logical OR operation (56) that performs a logical OR operation between a result of the first main collision determination and a result of the second main collision determination to obtains a result of the logical OR operation as the final result of the main collision determination.

8. The vehicle collision determination device (50B) according to claim 7,
wherein the first main collision determination algorithm (51) includes:
a third operation (51a) that calculates a third operation value using the first acceleration data (G_R3); and
a third comparison (51b) that compares magnitudes of the third operation value and a third threshold value and obtains a result of the comparison as a result of the first main collision determination, and
wherein the second main collision determination algorithm (54) includes:
a fourth operation (54a) that calculates a fourth operation value using the first acceleration data (G_R3);
a fifth operation (54b) that calculates a fifth operation value using the third acceleration data (G_L3); and
a map determination that determines whether or not an intersection of the fourth operation value and the fifth operation value on a 2-dimensional map is included in a collision area set on the 2-dimensional map and obtains a result of the determination as a result of the second main collision determination.

## Patentansprüche

1. Fahrzeugkollisionsbestimmungsvorrichtung (50, 50A, 50B), die eine Seitenkollisionsbestimmung auf der Grundlage von Beschleunigungsdaten durchführt, die von ersten Seiten-Außensensoren (20R1, 20R2, 20R3) und zweiten Seiten-Außensensoren (20L1, 20L2, 20L3) erfasst werden, welche auf einer ersten Seitenfläche und einer zweiten Seitenfläche des Fahrzeugs (100) vorgesehen sind, und die Aktivierung eines Insassenschutzsystems auf der Grundlage eines Ergebnisses der Seitenkollisionsbestimmung steuert, enthaltend:
einen Hauptkollisionsbestimmungsalgorithmus (51, 54, 55), der eine Hauptkollisionsbestimmung unter Verwendung erster Beschleunigungsdaten (G_R3), die von einem ersten Außensensor (20R3) an einer letzten Stufe unter den ersten Seiten-Außensensoren (20R1, 20R2, 20R3) erfasst worden sind, die auf der ersten Seitenfläche vorgesehen sind, durchführt;
einen Sicherungsbestimmungsalgorithmus (52), der eine Sicherungsbestimmung unter Verwendung zweiter Beschleunigungsdaten (G_R2), die von einem zweiten Außensensor (20R2) an einer der letzten Stufe vorangehenden Stufe erfasst worden sind, durchführt; und
eine erste logische UND-Operation (53), die eine logische UND-Operation zwischen einem Ergebnis der Hauptkollisionsbestimmung und einem Ergebnis der Sicherungsbestimmung durchführt, um ein Ergebnis der logischen UND-Operation als Endergebnis der Seitenkollisionsbestimmung zu erhalten,
**dadurch gekennzeichnet, dass** der zweite Außensensor (20R2) auf der ersten Seitenfläche vorgesehen ist.

2. Fahrzeugkollisionsbestimmungsvorrichtung (50, 50A, 50B) nach Anspruch 1,
wobei der Sicherungsbestimmungsalgorithmus (52) die Sicherungsbestimmung unter Verwendung dritter Beschleunigungsdaten (G_L3), die von einem dritten Außensensor (20L3) an einer letzten Stufe unter den zweiten Seiten-Außensensoren (20L1, 20L2, 20L3) erfasst worden sind, die auf der zweiten Seitenfläche vorgesehen sind, zusätzlich zu den zweiten Beschleunigungsdaten (G_R2) durchführt.

3. Fahrzeugkollisionsbestimmungsvorrichtung (50, 50A, 50B) nach Anspruch 2,
wobei der Sicherungsbestimmungsalgorithmus (52) enthält:
eine erste Operation (52a), die einen ersten Operationswert unter Verwendung der zweiten Beschleunigungsdaten (G_R2) berechnet;
einen ersten Vergleich (52b), der Größen des ersten Operationswertes und eines ersten Schwellenwertes vergleicht;
eine zweite Operation (52c), die einen zweiten Operationswert unter Verwendung der dritten Beschleunigungsdaten (G_L3) berechnet;
einen zweiten Vergleich (52d), der Größen des zweiten Operationswertes und eines zweites Schwellenwertes vergleicht; und
eine zweite logische UND-Operation (52e), die eine logische UND-Operation zwischen einem Vergleichsergebnis des ersten Vergleichs (52b) und einem Vergleichsergebnis des zweiten Vergleichs (52d) durchführt, um ein Ergebnis der logischen UND-Operation als Ergebnis der Sicherungsbestimmung zu erhalten.

4. Fahrzeugkollisionsbestimmungsvorrichtung (50) nach irgendeinem der Ansprüche 1 bis 3,
wobei der Hauptkollisionsbestimmungsalgorithmus (51) enthält:
eine dritte Operation (51a), die einen dritten Operationswert unter Verwendung der ersten Beschleunigungsdaten (G_R3) berechnet; und
einen dritten Vergleich (51 b), der Größen des dritten Operationswertes und eines dritten Schwellenwertes vergleicht und ein Vergleichsergebnis als Ergebnis der Hauptkollisionsbestimmung erhält.

5. Fahrzeugkollisionsbestimmungsvorrichtung (50A) nach irgendeinem der Ansprüche 1 bis 3,
wobei der Hauptkollisionsbestimmungsalgorithmus (54) die Hauptkollisionsbestimmung unter Verwendung dritter Beschleunigungsdaten (G_L3), die von einem dritten Außensensor (20L3) an einer letzten Stufe unter den zweiten Außensensoren (20L1, 20L2, 20L3 erfasst worden sind), die auf der zweiten Seitenfläche vorgesehen sind, zusätzlich zu den ersten Beschleunigungsdaten (G_R3), durchführt.

6. Fahrzeugkollisionsbestimmungsvorrichtung (50A) nach Anspruch 5,
wobei der Hauptkollisionsbestimmungsalgorithmus (54) enthält:
eine vierte Operation (54a), die einen vierten Operationswert unter Verwendung der ersten Beschleunigungsdaten (G_R3) berechnet;
eine fünfte Operation (54b), die einen fünften Operationswert unter Verwendung der dritten Beschleunigungsdaten (G_L3) berechnet; und
eine Kennfeldbestimmung, die bestimmt, ob ein Schnittpunkt des vierten Operationswertes und des fünften Operationswertes auf einem zweidimensionalen Kennfeld in einem Kollisionsbereich enthalten ist, der auf dem zweidimensionalen Kennfeld festgelegt ist, und ein Bestimmungsergebnis als Ergebnis der Hauptkollisionsbestimmung erhält.

7. Fahrzeugkollisionsbestimmungsvorrichtung (50B) nach irgendeinem der Ansprüche 1 bis 3,
wobei der Hauptkollisionsbestimmungsalgorithmus (55) enthält:
einen ersten Hauptkollisionsbestimmungsalgorithmus (51), der eine erste Hauptkollisionsbestimmung unter Verwendung der ersten Beschleunigungsdaten (G_R3) durchführt;
einen zweiten Hauptkollisionsbestimmungsalgorithmus (54), der eine zweite Hauptkollisionsbestimmung unter Verwendung der ersten Beschleunigungsdaten (G_R3) und dritter Beschleunigungsdaten (G_L3), die von einem dritten Außensensor (20L3) an einer letzten Stufe unter den zweiten Seiten-Außensensoren (20L1, 20L2, 20L3) erfasst worden sind, die auf der zweiten Seitenfläche vorgesehen sind, durchführt; und
eine logische ODER-Operation (56), die eine logische ODER-Operation zwischen einem Ergebnis der ersten Hauptkollisionsbestimmung und einem Ergebnis der zweiten Hauptkollisionsbestimmung durchführt, um ein Ergebnis der logischen ODER-Operation als Endergebnis der Hauptkollisionsbestimmung zu erhalten.

8. Fahrzeugkollisionsbestimmungsvorrichtung (50B) nach Anspruch 7, wobei der erste Hauptkollisionsbestimmungsalgorithmus (51) enthält:
eine dritte Operation (51a), die einen dritten Operationswert unter Verwendung der ersten Beschleunigungsdaten (G_R3) berechnet; und
einen dritten Vergleich (51 b), der Größen des dritten Operationswertes und eines dritten Schwellenwertes vergleicht und ein Vergleichsergebnis als Ergebnis der ersten Hauptkollisionsbestimmung erhält, und
wobei der zweite Hauptkollisionsbestimmungsalgorithmus (54) enthält:
eine vierte Operation (54a), die einen vierten Operationswert unter Verwendung der ersten Beschleunigungsdaten (G_R3) berechnet;
eine fünfte Operation (54b), die einen fünften Operationswert unter Verwendung der dritten Beschleunigungsdaten (G_L3) berechnet; und
eine Kennfeldbestimmung, die bestimmt, ob ein Schnittpunkt des vierten Operationswertes und des fünften Operationswertes auf einem zweidimensionalen Kennfeld in einem Kollisionsbereich enthalten ist, der auf dem zweidimensionalen Kennfeld festgelegt ist, und ein Bestimmungsergebnis als Ergebnis der zweiten Hauptkollisionsbestimmung erhält.

## Revendications

1. Dispositif (50, 50A, 50B) de détermination de collision d'un véhicule, qui effectue une détermination de collision latérale sur la base de données d'accélération acquises par des capteurs (20R1, 20R2, 20R3) par satellite d'un premier côté et des capteurs (20L1, 20L2, 20L3) par satellite d'un second côté, prévus sur une première surface latérale et une deuxième surface latérale du véhicule (100), et commandent l'activation d'un système de protection des occupants sur la base d'un résultat de la détermination de collision latérale, comprenant :
un algorithme (51, 54, 55) principal de détermination de collision, qui effectue une détermination principale de collision, en utilisant une première donnée (G_R3) d'accélération acquise par un premier capteur (20R3) par satellite à un dernier stade parmi les premiers capteurs (20R1, 20R2, 20R3) par satellite prévus sur la première surface latérale ;
un algorithme (52) de détermination de sûreté, qui effectue une détermination de sûreté, en utilisant une deuxième donnée (G_R2) d'accélération acquise par un deuxième capteur (20R2) par satellite à un stade précédant le dernier stade ;
et une première opération (53) logique ET, qui effectue une opération logique ET entre un résultat de la détermination principale de collision et un résultat de la détermination de sûreté, pour obtenir un résultat de l'opération logique ET comme résultat final de la détermination de collision latérale,
**caractérisé en ce que** le deuxième capteur (20R2) par satellite est prévu sur la première surface latérale.

2. Dispositif (50, 50A, 50B) de détermination de collision d'un véhicule suivant la revendication 1, dans lequel l'algorithme (52) de détermination de sûreté effectue la détermination de sûreté, en utilisant une troisième donnée (G_L3) d'accélération acquise par un troisième capteur (20L3) par satellite à un dernier stade parmi les deuxièmes capteurs (20L1, 20L2, 20L3) latéraux par satellite prévus sur la deuxième surface latérale en plus de la deuxième donnée (G_R2) d'accélération.

3. Dispositif (50, 50A, 50B) de détermination de collision d'un véhicule suivant la revendication 1,
dans lequel l'algorithme (52) de détermination de sûreté comprend :
une première opération (52a), qui calcule une première valeur d'opération en utilisant la deuxième donnée (G_R2) d'accélération ;
une première comparaison (52b), qui compare des grandeurs de la première valeur d'opération et une première valeur de seuil ;
une deuxième opération (52c), qui calcule une deuxième valeur d'opération, en utilisant la troisième donnée (G_L3) d'accélération ;
une deuxième comparaison (52d), qui compare des grandeurs de la deuxième valeur d'opération et une deuxième valeur de seuil ; et
une deuxième opération (52e) logique ET, qui effectue une opération logique ET entre un résultat de la comparaison par la première comparaison (52b) et un résultat de la comparaison par la deuxième comparaison (52d), pour obtenir un résultat de l'opération logique ET comme résultat de la détermination de sûreté.

4. Dispositif (50) de détermination de collision d'un véhicule suivant l'une quelconque des revendications 1 à 3,
dans lequel l'algorithme (51) principal de détermination de collision comprend :
une troisième opération (51a), qui calcule une troisième valeur d'opération en utilisant la première donnée (G_R3) d'accélération ; et
une troisième comparaison (51b), qui compare des grandeurs de la troisième valeur d'opération et une troisième valeur de seuil et obtient un résultat de la comparaison comme résultat de la détermination principale de collision.

5. Dispositif (50A) de détermination de collision d'un véhicule suivant l'une quelconque des revendications 1 à 3, dans lequel l'algorithme (53) principal de détermination de collision effectue la détermination principale de collision en utilisant une troisième donnée (G_L3) d'accélération acquise par un troisième capteur (20L3) par satellite à un dernier stade parmi les deuxièmes capteurs (20L1, 20L2, 20L3) latéraux par satellite prévus sur la deuxième surface latérale en plus de la première donnée (G_R3) d'accélération.

6. Dispositif (50A) de détermination de collision d'un véhicule suivant la revendication 5,
dans lequel l'algorithme (54) principal de détermination de collision comprend :
une quatrième opération (54a), qui calcule une quatrième valeur d'opération en utilisant une première donnée (G_R3) d'accélération ;
une cinquième opération (54b), qui calcule une cinquième valeur d'opération en utilisant une troisième donnée (G_L3) d'accélération ; et
une détermination de plan, qui détermine si ou non une intersection de la quatrième valeur d'opération et de la cinquième valeur d'opération sur un plan en deux dimensions est incluse dans une zone de collision fixée sur le plan en deux dimensions et obtient un résultat de la détermination en tant que résultat de la détermination principale de collision.

7. Dispositif (50B) de détermination de collision d'un véhicule suivant l'une quelconque des revendications 1 à 3,
dans lequel l'algorithme (55) principal de détermination de collision comprend :
un premier algorithme (51) principal de détermination de collision, qui effectue une première détermination principale de collision en utilisant la première donnée (G_R3) d'accélération ;
un deuxième algorithme (54) principal de détermination de collision, qui effectue une deuxième détermination principale de collision en utilisant la première donnée (G_R3) d'accélération et une troisième donnée (G_L3) d'accélération acquise par un troisième capteur (20L3) par satellite à un dernier stade parmi les deuxièmes capteurs (20L2, 20L3) latéraux par satellite prévus sur la deuxième surface latérale ; et
une opération (56) logique OU, qui effectue une opération logique OU entre un résultat de la première détermination principale de collision et un résultat de la deuxième détermination principale de collision pour obtenir un résultat de l'opération logique OU comme résultat final de la détermination principale de collision.

8. Dispositif (50B) de détermination de collision d'un véhicule suivant la revendication 7,
dans lequel le premier algorithme (51) principal de détermination de collision comprend :
une troisième opération (51a), qui calcule une troisième valeur d'opération en utilisant la première donnée (G_R3) d'accélération ; et
une troisième comparaison (51b), qui compare des grandeurs de la troisième valeur d'opération et une troisième valeur de seuil et obtient un résultat de la comparaison en tant que résultat de la première détermination principale de collision, et
dans lequel le deuxième algorithme (54) principal de détermination de collision comprend :
une quatrième opération (54a), qui calcule une quatrième valeur d'opération en utilisant la première donnée (G_R3) d'accélération ;
une cinquième opération (54b), qui calcule une cinquième valeur d'opération en utilisant une troisième donnée (G_L3) d'accélération ; et
une détermination de plan, qui détermine si ou non une intersection de la quatrième valeur d'opération et de la cinquième valeur d'opération sur un plan en deux dimensions est incluse dans une zone de collision fixée sur le plan en deux dimensions et obtient un résultat de la détermination en tant que résultat de la deuxième détermination principale de collision.
